Europäisches Patentamt

(19) European Patent Office

Office européen des brevets

(11) Publication number : **0 198 802**
**B1**

(12) **EUROPEAN PATENT SPECIFICATION**

(45) Date of publication of patent specification :
13.12.89

(21) Application number : 86830080.7

(22) Date of filing : 01.04.86

(51) Int. Cl.⁴ : **B 62 B   7/08**, B 62 B   9/00

---

(54) **Seatback with pivoted headrest for children's strollers.**

---

(30) Priority : 16.04.85 ES 286562

(43) Date of publication of application :
22.10.86 Bulletin 86/43

(45) Publication of the grant of the patent :
13.12.89 Bulletin 89/50

(84) Designated contracting states :
BE DE FR GB IT NL

(56) References cited :
DE–A– 3 414 404
GB–A– 2 089 292

(73) Proprietor : Jané Cabagnero, Ramon
203 Cartagena Street
08013 Barcelona (ES)

(72) Inventor : Jané Cabagnero, Ramon
203 Cartagena Street
08013 Barcelona (ES)

(74) Representative : Righetti, Giuseppe
Bugnion S.p.A. Via Carlo Farini, 81
I-20159 Milano (IT)

## Description

The present patent refers to a seatback with pivoted headrest for children's strollers comprising pivoted supporting components connected to the seat's side components and laterally extended by snaping up flexible earflaps so that at the lower portion of the seatback said earflaps and headrest are shaped like a box, said seatback's side components upwardly comprising the pivoting of respective supplement lengths which at their lower ends are pivotedly related with respective rear struts which at their lower portion are abutted with respective components rotatively engaged in associated supports fitted on the seat side components.

A seatback of this type is known form GB-A-2 089 292. This document discloses in particular a seat assembly for the baby carriage comprising a seat a back rest and a head guard.

The seat which is mounted on the frame of the assembly is attached to laterally extending members included in the baby carriage main body.

The back rest is retained by a back rest retaining member turnably attached to connectors through pivot pins thereon said connectors being provided on the lower ends of pusher rods. The lower end of the back rest retaining member, disposed below the back rest pivot pin is provided with a pivot pin whereby an intermediary link is turnably connected to the back rest retaining member. The intermediary link is formed with a substantially C-shaped guide hole which receives a guide pin provided on the connector. When the back rest retaining member is turned around the axis of the back rest pivot pin the intermediary link is turned while its guide hole is being guided by the guide pin. The intermediary link is operatively connected by means of a rigid connecting rod to a seat shaping member which is hinged on the back rest retaining member and supports the head guard. When the back rest is lowered the rigid connecting rod allows the seat shaping member to rotate so that the head guard is placed to 90° with respect to the back rest.

The above structure, which is based on an articulated parallelogram formed by the back rest retaining member, the seat shaping member, the rigid connecting rod and the intermediary link, does not prevent the seat to be upholstered, does not either in any way whatsoever prevent the folding of the stroller when the seatback is forwardly laid down and is also automatic.

The object of the present invention is to carry out a seatback with pivoted headrest for children's strollers which is able to achieve the above advantages by means of a more simplified structure based on an articulated triangle in order to have a better handling in the operations of opening and closing the children's strollers.

This object is achieved according to the characterising portion of claim 1, by providing the children's stroller with a headrest supported by two side lengths pivoted to the seatback frame sides which lengths are downwardly pivoted to respective rear struts being put against respective blocks pivoted to associated supports of the seat frame sides, in a way that when the seatback is rearwardly moved the headrest swings upwardly pushed by said struts. Between the headrest supporting lengths and the seatback frame sides respective springs are arranged which hold up the struts placed against the respective blocks and at the same time ensuring a correct position of said lengths in the extension of said sides at the seatback raised position.

Said struts downwardly show respective extensions slidably going through said blocks whereon abutment is made by the struts, allowing this action a guiding extension of the struts to facilitate the forwardly folding of the seatback.

To make the previous disclosure more clear, a drawing sheet is attached wherein is shown a practical case of embodiment only cited by way of a non-exhaustive example of the scope of this invention patent.

In the drawings :

Figure 1 shows a rear perspective view of the seatback unit with the headrest in a raised position, and

Figure 2 shows this same seatback unit in a laying down position and with a raised headrest.

Referring to the drawings, the seatback (1) is sideways supported by a frame made up with two tubular components (2) being downwardly pivoted by respective supports (3) to the respective tubular components (4) making up the seat frame.

The seatback frame sides (2) are finished off with respective upper ferrules (5) whereon are pivoted respective angularly cross-sectioned components (6) supporting the extension (1') of the seatback making up a headrest. These components shape up a lower attachment (6') whereon upwardly are pivoted respective struts (7) made up with respective rods with upper inflection (7') and lower inflection (7") with which said struts are abutted against respective components (8) made up with blocks being pivoted to respective supports (9) associated to the seat sides (4).

The attachments (6') of the lengths or components supporting the headrest (1') are related with the upper portion of the sides (2) of the seatback frame by respective helical springs (10) being pulled in their operation while holding up the components (6) in the extension of said sides and also the struts (7) placed against the blocks (8).

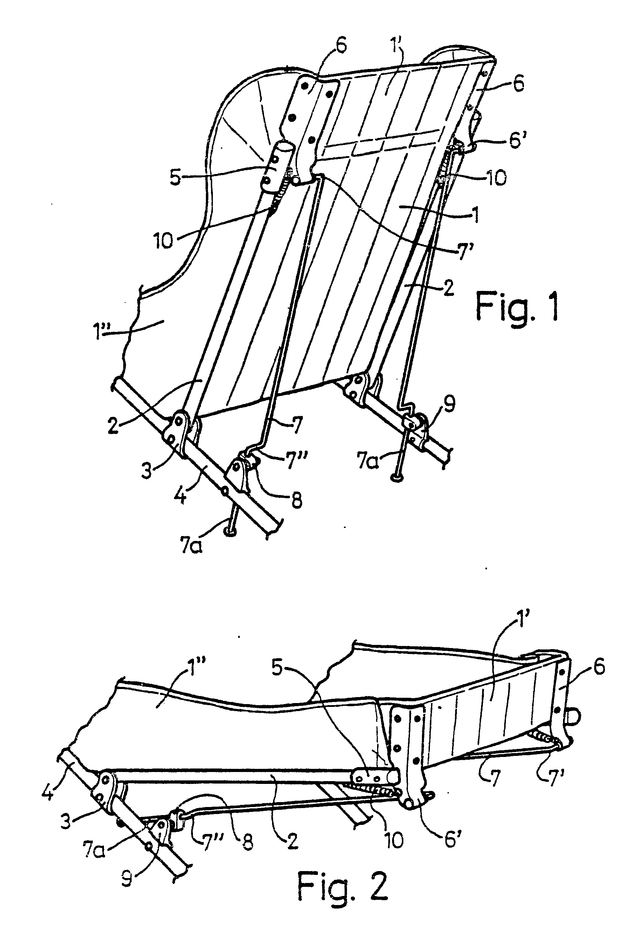

The seatback shows the sides (1") making up earflaps being upwardly extended towards the upper edge of the headrest (2'), the upper area of said earflaps are folded and bent when by laying down the seatback (figure 2) the headrest (1') is kept raised making up in this way something resembling a box.

The struts (7) after the lower inflection (7") again are inflectioned and freely slidably inserted in the respective blocks (8) by means of respective extensions (7a) thereby allowing that in the forwardly folding of the seatback, the struts become extended without being disengaged from said block-components.

The operation of this seatback with headrest is simple and automatic, in this way if the seatback is in the raised position as shown in figure 1, when rearwardly inclined the angular components or lengths (6) would then be forced to swing because the struts (7) are being abutted against the blocks-components (8) and go on by adopting the arrangement seen in figure 2. To come again to the arrangement of figure 1 only is needed to raise the seatback, the springs (10) are then retrieved and the angular components (6) and the headrest (1') are held up in a coplanar extension with the seat back (1) and its frame (2).

This seatback with pivoted headrest can also be manufactured in any shape and size, with any means and materials deemed more suitable and with the more convenient accessories.

## Claims

1. A seatback (1) with a pivoted headrest (1') for children's strollers, comprising pivoted supporting components (2) connected to the seat's side components (4) and laterally extended by shaping up flexible earflaps (1'') so that at the lower portion of the seatback (1), said earflaps (1'') and headrest (1'') are shaped like a box, said seatback (1)'s side components (2) upwardly comprising the pivoting of respective supplement lengths (6) which at their lower ends are pivotedly related with respective rear struts (7) which at their lower portion are abutted with respective components (8) rotatively engaged in associated supports (9) fitted on the seat side components (4), characterized in that said components (8) are made up with blocks pivoted to the supports (9) and having a hole slidingly engaged by the rear struts (7) to allow the seatback to be folded and in that said supplemented lengths (6) are related with the own side components (2) of the seatback (1) by respective springs (10) which tend to hold said lengths up in the extension of said side components (2).

2. A seatback with pivoted headrest for children's strollers, according to claim 1, characterized in that the strut (7) lower portion is extended in a length (7a) slidably going through the rotating components (8) the guided way of which allowing the strut (7) to extend during the forwardly folding of the seatback (1).

## Patentansprüche

1. Rückenlehne (1) mit einer angelenkten Kopfstütze (1') für Kindersportwagen, bestehend aus angelenkten und mit den seitlichen Sitzteilen (4) verbundenen Stützelementen (2), die seitlich weitergeführt als biegsame Ohrschützer (1'') ausgebildet sind, wodurch im unteren Abschnitt der Rückenlehne (1) die besagten Ohrschützer (1'') und die genannte Kopfstütze (1') schachtelartig geformt sind, und die Seitenelemente (2) genannter Rückenlehne (1) oben die Anlenkung entsprechender Zusatzverlängerungen (6) beinhalten, die an ihren Unterenden in angelenkter Verbindung zu entsprechenden rückseitigen Streben (7) stehen, welche ihrerseits im unteren Bereich an entsprechende und in zugehörigen Halterungen (9) drehgelagerten Elemente (8) anstoßen, wobei die Halterungen (9) an den seitlichen Sitzteilen (4) befestigt sind, dadurch gekennzeichnet, daß die genannten Elemente (8) aus. an die Halterungen (9) angelenkten Blöcken bestehen und eine Bohrung für die gleitende Lagerung der rückseitigen Streben (7) zwecks Klappen der Rückenlehne aufweisen, und außerdem dadurch, daß genannte Zusatzverlängerungen (6) mit den eigenen Seitenelementen (2) der Rückenlehne (1) durch entsprechende Federn (10), die die genannten Verlängerungen als Weiterführung der genannten Seitenelemente (2) halten, verbunden sind.

2. Rückenlehne mit angelenkter Kopfstütze für Kindersportwagen nach Patentanspruch 1, dadurch gekennzeichnet, daß der untere Strebenbereich (7) eine sich gleitend durch die drehgelagerten Elemente (8) fortsetzende Verlängerung (7a) aufweist, wobei diese Führung der Strebe (7) ermöglicht sich beim Vorklappen der Rückenlehne (1) zu verlängern.

## Revendications

1. Dossier de siège (1) avec repose-tête (1') pivotable pour voiture d'enfant, comprenant des éléments tubulaires (2) pivotables de support reliés aux éléments tubulaires latéraux (4) du siège et s'étendant latéralement de manière à prendre la forme d'oreillettes flexibles (1'') de telle sorte qu'à la partie inférieure du dossier de siège (1) lesdits oreillettes (1'') et repose-tête (1') sont en forme de boîte, lesdits éléments tubulaires (2) prévus sur le côté du dossier de siège (1) comportant à leur partie supérieure le pivotement de respectives portions supplémentaires (6) qui à leurs extrémités inférieures sont reliées à pivotement à de respectives entretoises arrière (7) qui à leur partie inférieure viennent buter contre des éléments respectifs (8) engagés à rotation dans des supports associés (9), ajustés sur les éléments tubulaires latéraux (4) du siège, caractérisé en ce que lesdits éléments (8) se composent de blocs montés à pivotement sur les supports (9) et pourvus d'un trou engagé par coulissement par les entretoises arrière (7) en vue de permettre le pliage du dossier de siège et en ce que lesdites portions supplémentaires (6) sont reliées à leurs respectifs éléments tubulaires latéraux (2) du dossier de siège (1) par des ressorts respectifs (10) tendant à maintenir lesdites portions vers le haut lors de l'extension desdits éléments tubulaires latéraux (2).

2. Dossier de siège avec repose-tête pivotable pour voiture d'enfant selon la revendication 1, caractérisé en ce que la partie inférieure de l'entretoise (7) s'étend à former une portion (7a) qui passe de manière coulissante à travers les éléments tournants (8) dont le chemin guidé permet à l'entretoise (7) de s'étendre pendant le pliage en avant du dossier de siège (1).

Fig. 1

Fig. 2